# EUROPEAN PATENT SPECIFICATION

(11) **EP 4 339 675 B1**
(45) Date of publication and mention of the grant of the patent: **20.05.2026**
(21) Application number: 23220504.7
(22) Date of filing: 28.12.2023
(51) Int. Cl.: G02B 6/44

(54) **FIBER OPTIC CONNECTOR KIT FOR BUTT CLOSURE**
FASEROPTISCHES VERBINDUNGSKIT FÜR STOSSVERSCHLUSS
KIT DE CONNECTEUR DE FIBRE OPTIQUE POUR FERMETURE BOUT À BOUT

(30) Priority: 07.07.2023 US 202363525464 P
(43) Date of publication of application: 20.03.2024
(73) Proprietor: AFL Telecommunications LLC, Duncan, SC 29334 (US)
(72) Inventor: Turner, Kelvin, Duncan, SC 29334 (US); Hrobak, Jacob David, Duncan, SC 29334 (US); McAbee, Jonathan, Duncan, SC 29334 (US)
(74) Representative: Serjeants LLP

(56) References cited:
- WO-A1-2022/246258
- WO-A1-2023/081527
- US-A- 5 793 920
- US-A1- 2020 088 964
- US-B1- 6 226 436

## Description

### PRIORITY STATEMENT

The present application claims the benefit of priority to U.S. provisional application no. 63/525,464, filed July 07, 2023, the disclosure of which is incorporated herein in its entirety.

### FIELD

The present disclosure relates generally to closures, such as for fiber optic cable connections, and more specifically to improved connection devices for butt closures.

### BACKGROUND

Certain closures, referred to as "butt" or "domed" closures, are utilized in outdoor environments to facilitate the connection of transmission cables such as fiber optic cables. The cables enter the closure through a sealed base, and connection of the cable elements occurs within the closure. In the case of fiber optic cables, spliced-together optical fibers are held within the closure.

In many cases, the closure must be sealed to a significant exterior pressure, in some cases to a 6.1 m (20 foot) waterhead pressure or more. Further, the closure must accommodate a large range of cables. For example, cable diameters for medium size closures can range from about 1 cm (0.4") to about 3 cm (1.2") and for smaller cables, multiple cables (such as three and/or four) must pass through a single port.

Many known closures use through-holes in the bases thereof with seals that enter into the ports defined in the bases. However, such seals in many cases are not reliable or are difficult to utilize. Additionally, in many cases, known closures require that all seals be sealed and unsealed together as a single sealing system. Still further, movement of the cables during use in a sealed closure can cause damage to the cables and sealing components in the closure. WO 2022/246258A1 discloses a butt closure for a fiber optic cable according to the prior art.

Accordingly, connection devices for butt closures that address one or more issues above would be beneficial and advantageous. Furthermore, improved connection devices for use with butt closures would be advantageous.

### BRIEF DESCRIPTION

The is directed to a butt closure for a fiber optic cable according to claim 1. Different embodiments are set out in the dependent claims.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION

A full and enabling disclosure of the present invention, including the best mode thereof, directed to one of ordinary skill in the art, is set forth in the specification, which makes reference to the appended figures, in which:
FIG. 1 is a perspective view of a butt closure in accordance with embodiments of the present disclosure;
FIG. 2 is a perspective view of a base for a butt closure including an embodiment of a connector collar in accordance with embodiments of the present disclosure;
FIG. 3 is a perspective view of the base for the butt closure, with a wedge assembly removed, including an exemplary embodiment of the connector collar in accordance with embodiments of the present disclosure;
FIG. 4 provides a perspective view of the exemplary connector collar in accordance with aspects of the present disclosure;
FIG. 5 provides a perspective view of the exemplary connector collar in accordance with aspects of the present disclosure;
FIG. 6 provides a perspective view of the exemplary connector collar in accordance with aspects of the present disclosure; and
FIG. 7 provides a perspective view of the exemplary connector collar in accordance with aspects of the present disclosure.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the claims. For instance, features illustrated or described as part of one embodiment can be used with another embodiment to yield a still further embodiment. Thus, it is intended that the present invention covers such modifications and variations as come within the scope of the appended claims.

Referring now to the figures, embodiments of butt closures 10 including a connector collar 300 in accordance with the present disclosure are provided. Closures 10 in accordance with the present disclosure, and in particular the bases or collars thereof, advantageously provide improved sealing when utilized with a large variety of cable diameters. Additionally, closures, bases, and collars thereof are easy and efficient to utilize in the field, with the installation of cables through a collar and base in a secure, sealed manner being easily and efficiently accomplished.

Various additional advantages of closures, bases, and collars in accordance with the present disclosure include: the use of gel surrounding the collar allows for use of a large range of cable diameters; single-piece collars protect cables extending therethrough from rotation, torsion, shearing, misplacement or displacement of the cables relative to the base or the closure; sealing and protection appropriate for Optical Ground Wire (OPGW) cables, such as to inhibit fluid leakage into the base, the collar, or the closure.

Still further, in exemplary embodiments, features of collars, closures, and bases in accordance with the present disclosure advantageously allow for improved sealing with cables of various diameters, such as OPGW cables, while also mitigating the risk of damage due to cable movement during use. For example, flanges and grooves as discussed herein advantageously mitigates such risk. Further, hard collars (e.g., stainless steel, or other rigid, non-corrosive material) mitigate transferring stresses to the cable, as well as advantageously create a robust seal and generally prevent the cables from damaging other components.

A coordinate system may be defined for a closure 10 and collar 300. Such coordinate system may include a longitudinal axis 12, a radial axis 14, and a circumferential axis 16, as shown.

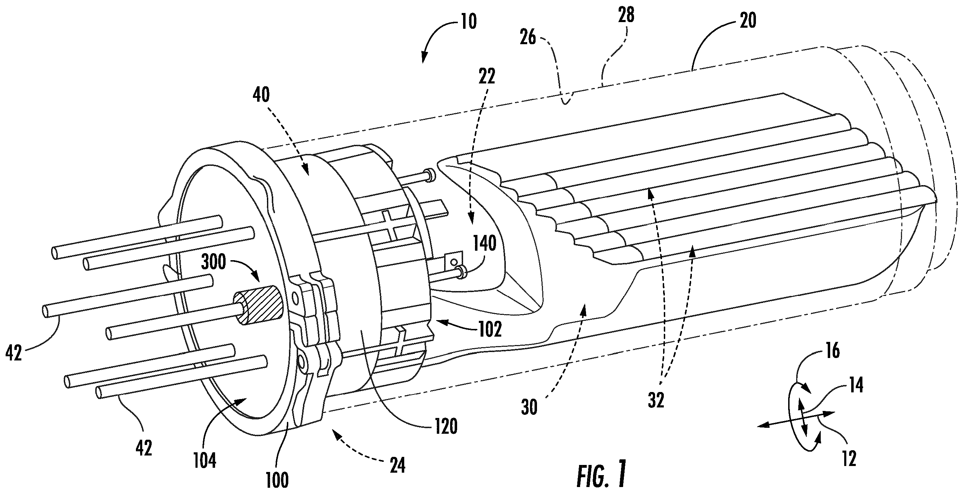

Referring now to FIG. 1, a closure 10 in accordance with the present disclosure includes a cover 20. Cover 20 is generally a domed cover which defines an interior 22 and an opening 24 which provides access to the interior 24. Cover 20 may include an inner surface 26 which defines the interior 22 and an opposing outer surface 28 which is exposed to the external environment.

A tray assembly 30 may be insertable into (and thus disposed within) the interior 22, such as along the longitudinal axis 12. Tray assembly 30 may include one or more splice trays 32 or other suitable components for facilitating transmission component connections. For example, in the case of use with fiber optic cables, splices between optical fibers thereof may be housed in the various splice trays.

A base 40 may be insertable at least partially into (and thus disposed at least partially within) the interior 22, such as along the longitudinal axis 12. In some embodiments, tray assembly 30 may be connected to the base 40, such that insertion of the base 40 causes insertion of the tray assembly 30 into the interior 22. Cables 42 may be inserted through the base 40 into the interior 22, and connection between transmission elements thereof (such as optical fibers) may be made within the interior 22. Accordingly, the base 40 may provide improved sealing around such cables 42, such that leakage of water or other unwanted environmental materials are prevented from entering the interior 22.

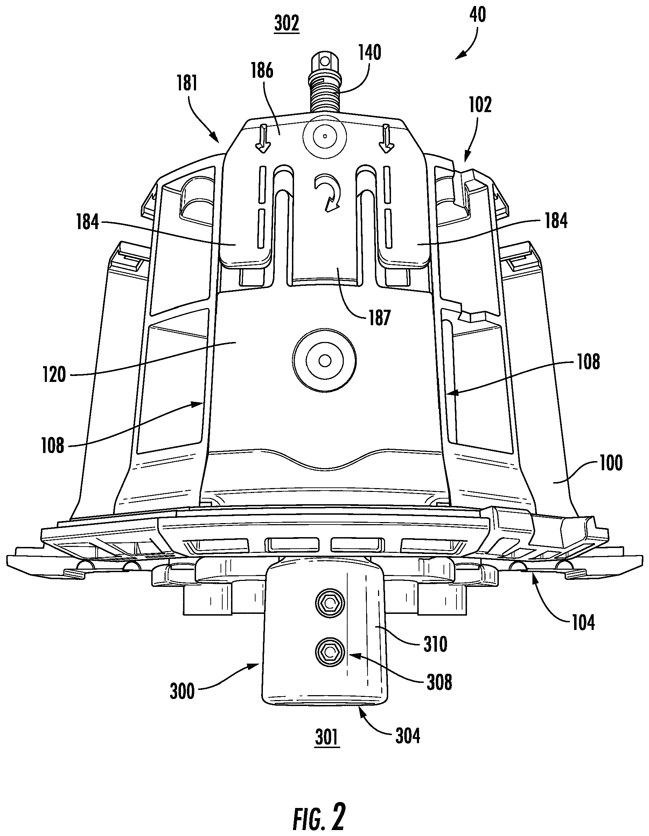

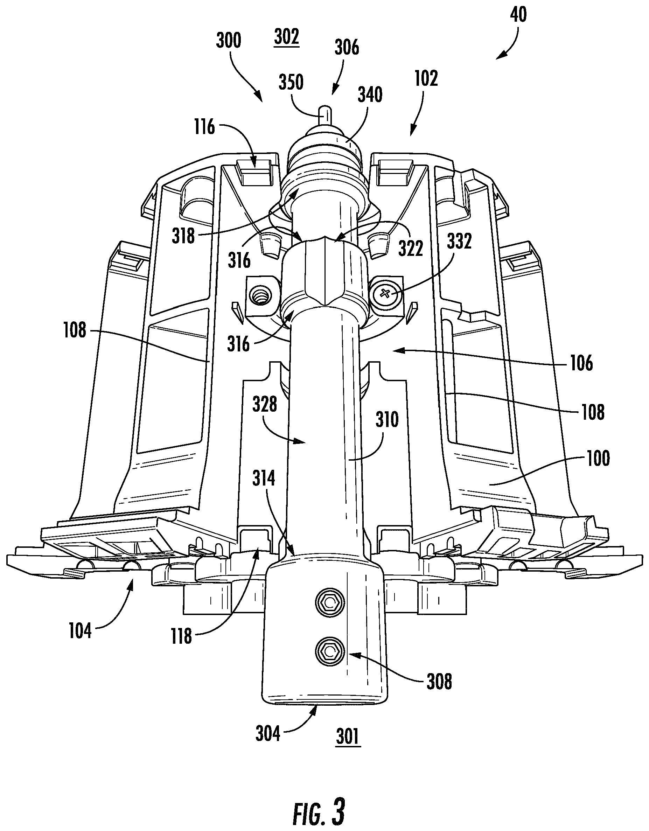

Referring now to FIGS. 2-3, details of bases 40 in accordance with embodiments of the present disclosure are provided. As shown in FIG. 3, a base 40 may, for example, include a base housing 100 which extends along the longitudinal axis 12 between a second outer surface 102 and an opposing first outer surface 104. When assembled into a closure 10, the second outer surface 102 may be disposed within the interior 22, and the first outer surface 104 may be within the interior 22 or exterior to the cover 20. First outer surface 104 may be exposed to the external environment surrounding the closure 10.

Between the first and second outer surfaces 102, 104, a plurality of cavities 106 may be defined in the base 40. The cavities 106 may be aligned in an annular array, such as along the circumferential axis 16. The cavities 106 may be spaced apart by sidewalls 108 which extend along the longitudinal axis 12 between the first and second outer surface 102, 104.

Each cavity 106 is designed to receive the connector collar 300 extending therethrough, such as along the longitudinal axis 12. For instance, collar 300 is selectively placeable into the cavity 106. Cavity 106 further includes components for facilitating sealing around such collar 300. Further, the base 40 may include various features for connecting wedge assemblies 120 thereto, each wedge assembly 120 being insertable into a cavity 106 such that the connector collar 300 in the cavity 106 is disposed and sealed between the base housing 100 and the wedge assembly 120.

A gel may be disposed in each cavity 106. The gel may, for example, be a thermoplastic, such as a thermoplastic elastomer, such as a vulcanized thermoplastic elastomer. When the collar 300 is inserted into the cavity 106, the collar 300 may contact the gel such that the gel at least partially surrounds the collar 300.

Each cavity 106 is defined between sidewalls 108. In some embodiments, the opposing sidewalls 108 which define the cavity 106 may extend substantially along the longitudinal axis 12. Additionally, one or more slots 116 may be defined in the base housing 100 adjacent each cavity 106, such as through and/or adjacent the second outer surface 102. Further, one or more passages 118 may be defined in the base housing 100 adjacent each cavity, such as through and/or adjacent the first outer surface 104. The slots 116 and passages 118 may facilitate the connection of wedge assemblies 120 to the base housing 100.

Each wedge assembly 120 is removably insertable into one of the plurality of cavities 106 and removably connectable to the base housing 100. When inserted and connected, the collar 300 including the cable 42 may be sealed within the cavity 106 between the base housing 100 and the wedge assembly 120.

Each wedge assembly 120 may include an outer cover 122 which defines a wedge interior. The gel may be disposed in the wedge interior. When the wedge assembly 120 is inserted and connected to the base housing 100, the interior of the wedge assembly 120 may face and be disposed within the cavity 106. When the collar 300 is inserted into the cavity 106, the gel may at least partially surround the collar 300. The gels may together fully surround the collar 300, in particular when one or both gels is compressed.

In exemplary embodiments, a compression assembly 140 may be operable to compress the wedge assembly 120 onto the base housing 100. Compression assembly 140 may any appropriate springs, actuators, shafts, or threads.

In an exemplary embodiment, the wedge assembly 120 includes a latch assembly 181 having a stop member 187. Stop member 187 may be connected to a latch 184 or bridge 186, and may selectively limit movement of the latch assembly 181 between an engaged position and disengaged position. In exemplary embodiments, the stop member 187 may be connected to and extend from the bridge 186. For example, the stop member 187 may be cantilevered from the bridge 186. In exemplary embodiments, the stop member 187 may be pivotable between a first position (open) and a second position (closed). For example, to move the stop member 187 from the first position to the second position, the stop member 187 may be actuated by a user, such as by the user applying pressure on the stop member 187 such as along a direction perpendicular to the longitudinal axis 12 (e.g., along the radial axis 14). Such pressure may pivot or otherwise move the stop member 187 from the first position to the second position.

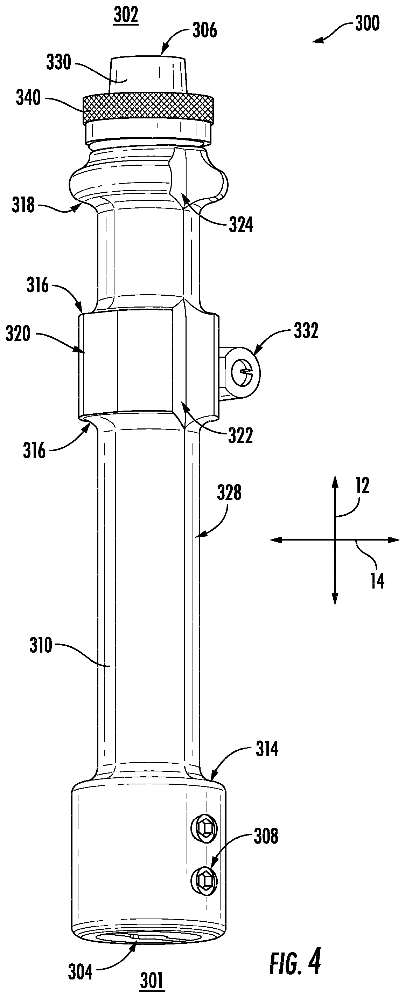

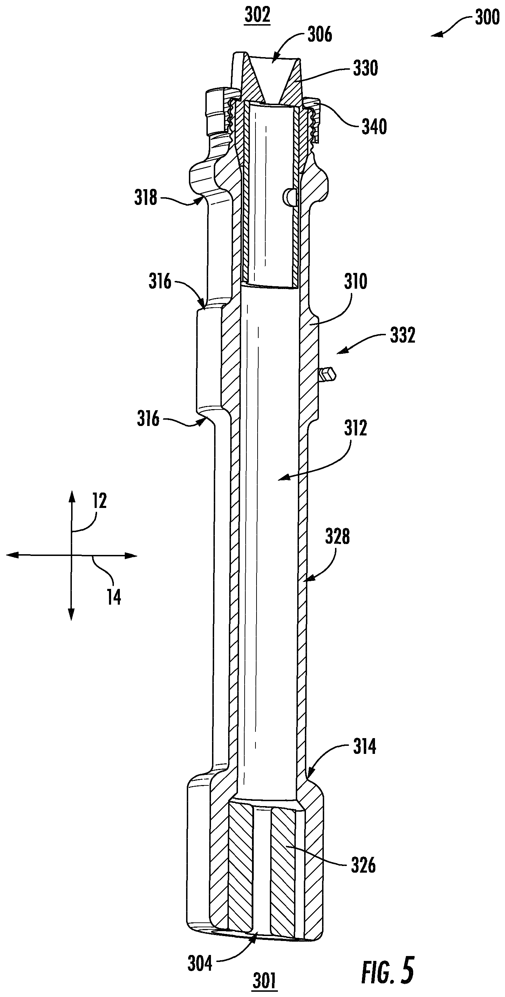

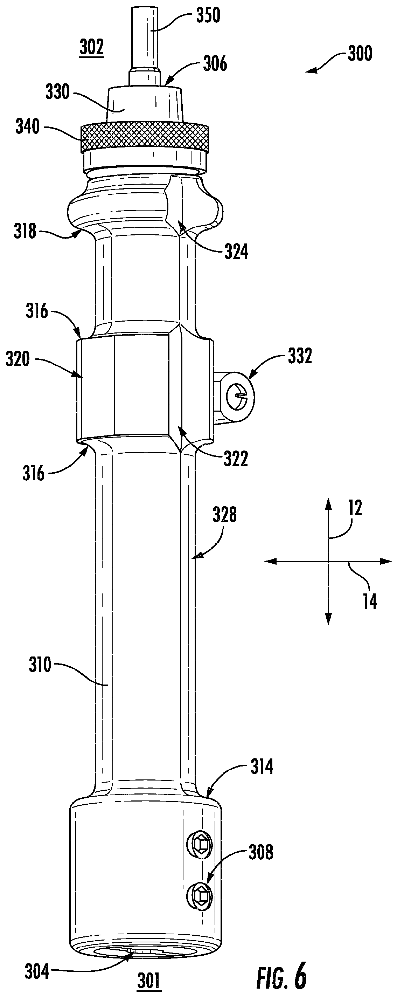

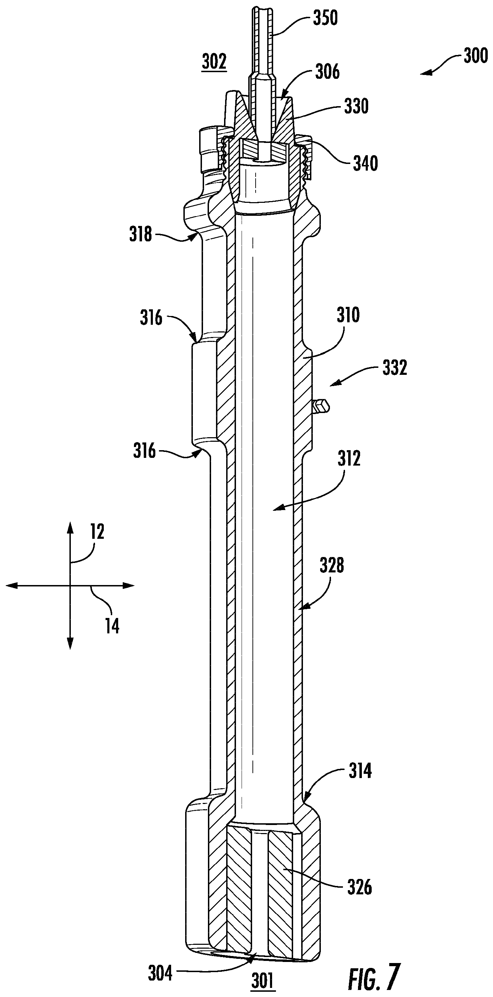

Referring now to Figs. 4-7, perspective views of an exemplary embodiment of the connector collar 300 in accordance with aspects of the present disclosure is provided. The collar 300 includes a shaft 310 extending along the longitudinal axis 12 (relative to installation through the base into the closure). Within the shaft 310, a passage 312 is formed extending from a first end 301 through a second end 302. The second end 302 is relative to an end extending into or proximate to the closure (e.g., closure 10) and the first end 301 is distal to the second end 302 along the longitudinal axis 12 (e.g., outside of the closure 10 and base 40). The cable 42, such as an OPGW cable, is extendable through the collar 300 via passage 312 into the closure, such as through a first end opening 304 at the first end 301 and egressing into the closure through a second end opening 306 at the second end 302. In various embodiments, a seal 326 is positioned at the first end 301 and configured to surround the cable. The seal 326 may form a grommet (e.g., a rubber grommet, collar, cylinder, or block) having a passage corresponding to passage 312 through which the cable is extendable. The seal 326 is placeable into the passage 312 through the first end 301. The seal 326 may be secured within the passage 312 via a fastener 308 extending through an outside surface 328 of the shaft 310 (e.g., fastener 308 extending along radial axis 14 through shaft 10 and into seal 326). A sealant (e.g., room-temperature vulcanizing (RTV) silicone, epoxy, or appropriate sealant) may be placed at passage 312 within and/or around seal 326, such as to mitigate fluid communication into passage 312.

A seal 330 is positioned at the second end 302. A fastener 340, such as a nut, is threadable to the second end 302 of the shaft 310, such as to position at least a portion of the seal 330 between the fastener 340 and the shaft 310. The seal 330 may include a rubber grommet, collar, cylinder, or block having an opening corresponding to passage 312 through which the cable is extendable through the second end opening 306. In some embodiments, a fiber collar 350 forms a shaft and extends the passage 312 therethrough. The collar 350 is placeable at the seal 330, such as at the longitudinal end, to allow the cable to extend through the shaft 310 and egress through the fiber collar 350.

The shaft 310 forms a plurality of radially extended flanges to inhibit movement of the collar 300 and cable along the longitudinal axis 12. For instance, a first end flange 314 is formed extending outward along the radial axis 14 proximate to the first end 301. First end flange 314 may be configured to abut the first outer surface 104 of the base 40. In some embodiments, the seal 326 is positioned between the first end opening 304 and the first end flange 314.

In various embodiments, the shaft 310 forms a second end flange 318 proximate to the second end 302. In some embodiments, the seal 330 and fastener 340 are positioned between the second end opening 306 and the second end flange 318. Second end flange 318 may be configured to abut the second outer surface 102 of the base 40.

In some embodiments, the shaft 310 forms a mid-span flange 316 positioned between the first and second end flanges 314, 318. In various embodiments, a substantially flat surface 320 is positioned at the mid-span flange 316. For instance, the flat surface 320 extends along the longitudinal axis 312. The flat surface 320 may form a chord along a rounded outer surface of the flange 316. In some embodiments, a plurality of flat surfaces 320 is positioned at flange 316 at various circumferential locations.

A groove 322 may be formed extending along the longitudinal axis 12 and extending through the mid-span flange 316. The groove 322 may form a surface extending radially inward from the flange 316. Additionally, or alternatively, the groove may be formed extending along the longitudinal axis 12 through the second end flange 318, such as depicted at groove 324. Grooves 322, 324 may extend along the longitudinal axis 12, such as at substantially the same location along a circumferential direction.

Embodiments of the shaft 310 may form a single, unitary, monolithic component, such as to extend entirely through the base 40 along the longitudinal axis 12 and promote sealing and mitigate fluid communication into the base 40, the closure 10, or at the passage 312 within the shaft 310. In various embodiments, shaft 310 may be formed of a steel material, such as stainless steel.

Embodiments of the connector collar 300 provided herein may form a connector kit allowing for the transfer of fiber optic components inside of an OPGW cable (e.g., cable 42) into a base (e.g., base 40), such as over plastic cables extending through a base and directly exposed to gel or sealants at the base. Flanges, such as flanges 314, 316, 318, mitigate translation along the longitudinal axis 12, such as to prevent undesired movement of connectors and fiber components within the closure 10. Flat surfaces 320 prevent rotation of connectors and fiber components within the closure 10. One or more fasteners 332, such as may be positioned at the mid-span flange 316, may increase torsional resistance. The fastener 332 may couple to one or more surfaces at the base 40, such as within cavity 106. The collar 300 extends into an interior (e.g., cavity 106) of the base 40 and is circumferentially surrounded by a sealing gel, such as to allow for a full 360 degree seal. Groove 322, 324 provides a positioning feature for the shaft 310 relative to the base 40 and the closure 10, such as to mitigate mis-installation, and provide a relief for tightening down the gel layer.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims.

## Claims

1. A butt closure (10) for a fiber optic cable (42), the butt closure (10) comprising:
a cover (20) forming an interior (22) and an opening (24) providing access to the interior (22);
a tray assembly (30) insertable into the interior (22) to be disposed within the cover (20), the tray assembly (30) configured to facilitate fiber optic transmission component connections;
a base (40) at least partially insertable along a longitudinal axis (12) into the interior (22) formed by the cover (20), the base (40) comprising a first outer surface (104) separated along the longitudinal axis (12) from a second outer surface (102), the second outer surface (102) proximate to the interior (22) of the cover (20) and the first outer surface (104) distal to the interior (22) along the longitudinal axis (12), wherein a cavity (106) is formed between the first outer surface (104) and the second outer surface (102), and wherein the cavity (106) is formed between a pair of sidewalls (108) extending along the longitudinal axis (12); and
a connector collar (300) insertable into the cavity (106) at the base (40), the connector collar (300) comprising a shaft (310) extending along the longitudinal axis (12), the shaft (310) forming a passage (312) extending from a first end (301) proximate to the first outer surface (104) and a second end (302) proximate to the second outer surface (102), the passage (312) configured to receive a fiber optic cable (42) therethrough, the shaft (310) forming a plurality of flanges (314, 316, 318) extending outward along a radial axis (14) to inhibit movement of the connector collar (300) within the base (40) along the longitudinal axis (12), the shaft (310) forming a groove (322, 324) configured to position the connector collar (300) relative to the base (40);
**characterised in that**
the connector collar (300) further comprises a first seal (330) positioned at the second end (302), and a fastener (340) threadable onto the second end (302) of the shaft (310) to position at least a portion of the first seal (330) between the fastener (340) and the shaft (310), the first seal (330) being configured to extend around a fiber optic cable (42) extending via the passage (312) through the connector collar (300).

2. A butt closure (10) according to claim 1, wherein the groove (322, 324) extends along the longitudinal axis (12).

3. A butt closure (10) according to claim 1 or claim 2, wherein the groove (322, 324) extends through a mid-span flange (316) of the plurality of flanges positioned between the first end (301) and the second end (302) of the shaft (310).

4. A butt closure (10) according to any preceding claim, further comprising at least one wedge assembly (120), wherein the or each wedge assembly (120) comprises a flange extending along the longitudinal axis (12) corresponding to the groove (322, 324), the flange receivable at the groove (322, 324) when the or each wedge assembly (120) is positioned at the cavity (106) at the base (40).

5. A butt closure (10) according to any preceding claim, the connector collar (300) further comprising a first end flange (314) of the plurality of flanges, the first end flange (314) configured to abut the first outer surface (104) of the base (40).

6. A butt closure (10) according to any preceding claim, the connector collar (300) further comprising a second end flange (318) of the plurality of flanges, the second end flange (318) configured to abut the second outer surface (102) of the base (40).

7. A butt closure (10) according to claim 1, the first seal (330) comprising a rubber grommet, a collar, a cylinder, or a block having an opening corresponding to the passage (312).

8. A butt closure according to any preceding claim, the connector collar (300) comprising a second seal (326) positioned at the first end (301), wherein a fastener (308) is extendable along the radial axis (14) through an outer surface of the shaft (310) to extend into the second seal (326), the second seal (326) configured to surround the fiber optic cable (42) positioned through the passage (312) at the shaft (310).

9. A butt closure (10) according to any preceding claim, the plurality of flanges at the connector collar (300) comprising a mid-span flange (316) positioned between the first end (301) and the second end (302), the mid-span flange (316) comprising a flat surface (320) extending along the longitudinal axis (12).

10. A butt closure (10) according to claim 9, the flat surface (320) forming a chord along a rounded outer surface of the mid-span flange (316).

## Patentansprüche

1. Steckverschluss (10) für ein Glasfaserkabel (42), der Steckverschluss (10) umfassend:
eine Abdeckung (20), durch die ein Innenraum (22) und eine Öffnung (24), die Zugang zu dem Innenraum (22) bereitstellt, gebildet sind;
eine Trägeranordnung (30), die in den Innenraum (22) einsetzbar ist, um innerhalb der Abdeckung (20) angeordnet zu werden, wobei die Trägeranordnung (30) ausgebildet ist, Verbindungen von faseroptischen Übertragungskomponenten zu erleichtern;
ein Sockel (40), der zumindest teilweise entlang einer Längsachse (12) in den von der Abdeckung (20) gebildeten Innenraum (22) einsetzbar ist, wobei der Sockel (40) eine erste Außenoberfläche (104) umfasst, die entlang der Längsachse (12) von einer zweiten Außenoberfläche (102) getrennt ist, wobei die zweite Außenoberfläche (102) dem Innenraum (22) der Abdeckung (20) benachbart und die erste Außenoberfläche (104) entlang der Längsachse (12) von dem Innenraum (22) entfernt, wobei ein Hohlraum (106) zwischen der ersten Außenoberfläche (104) und der zweiten Außenoberfläche (102) gebildet ist, und wobei der Hohlraum (106) zwischen einem Paar Seitenwänden (108) gebildet ist, die sich entlang der Längsachse (12) erstrecken; und
eine Verbindungshülse (300), die in den Hohlraum (106) am Sockel (40) einsetzbar ist, wobei die Verbindungshülse (300) einen Schaft (310) umfasst, der sich entlang der Längsachse (12) erstreckt, wobei der Schaft (310) einen Durchgang (312) bildet, der sich von einem ersten Ende (301), das der ersten Außenoberfläche (104) benachbart ist, zu einem zweiten Ende (302), das der zweiten Außenoberfläche (102) benachbart ist, erstreckt, wobei der Durchgang (312) ausgebildet ist, ein Glasfaserkabel (42) hindurch aufzunehmen, wobei der Schaft (310) eine Vielzahl von Flanschen (314, 316, 318) bildet, die sich entlang einer Radialachse (14) nach außen erstrecken, um eine Bewegung der Verbindungshülse (300) innerhalb des Sockels (40) entlang der Längsachse (12) zu hemmen, wobei der Schaft (310) eine Nut (322, 324) bildet, die ausgebildet ist, die Verbindungshülse (300) relativ zu dem Sockel (40) zu positionieren;
**dadurch gekennzeichnet, dass**
die Verbindungshülse (300) weiter eine erste Dichtung (330) umfasst, die an dem zweiten Ende (302) positioniert ist, und ein Befestigungselement (340), das auf das zweite Ende (302) des Schafts (310) aufschraubbar ist, um zumindest einen Abschnitt der ersten Dichtung (330) zwischen dem Befestigungselement (340) und dem Schaft (310) zu positionieren, wobei die erste Dichtung (330) ausgebildet ist, sich um ein Glasfaserkabel (42) zu erstrecken, das über den Durchgang (312) durch die Verbindungshülse (300) hindurch verläuft.

2. Steckverschluss (10) nach Anspruch 1, wobei die Nut (322, 324) sich entlang der Längsachse (12) erstreckt.

3. Steckverschluss (10) nach Anspruch 1 oder Anspruch 2, wobei sich die Nut (322, 324) durch einen mittleren Flansch (316) der Vielzahl von Flanschen erstreckt, der zwischen dem ersten Ende (301) und dem zweiten Ende (302) des Schafts (310) positioniert ist.

4. Steckverschluss (10) nach einem vorstehenden Anspruch, der weiter mindestens eine Keilanordnung (120) umfasst, wobei die oder jede Keilanordnung (120) einen Flansch umfasst, der sich entlang der Längsachse (12) entsprechend der Nut (322, 324) erstreckt, wobei der Flansch an der Nut (322, 324) aufnehmbar ist, wenn die oder jede Keilanordnung (120) im Hohlraum (106) am Sockel (40) positioniert ist.

5. Steckverschluss (10) nach einem vorstehenden Anspruch, wobei die Verbindungshülse (300) weiter einen ersten Endflansch (314) der Vielzahl von Flanschen umfasst, wobei der erste Endflansch (314) zum Anschlagen an der ersten Außenoberfläche (104) des Sockels (40) ausgebildet ist.

6. Steckverschluss (10) nach einem vorstehenden Anspruch, wobei die Verbindungshülse (300) weiter einen zweiten Endflansch (318) der Vielzahl von Flanschen umfasst, wobei der zweite Endflansch (318) zum Anschlagen an der zweiten Außenoberfläche (102) des Sockels (40) ausgebildet ist.

7. Steckverschluss (10) nach Anspruch 1, wobei die erste Dichtung (330) eine Gummitülle, eine Manschette, einen Zylinder oder einen Block, der eine Öffnung aufweist, die dem Durchgang (312) entspricht, umfasst.

8. Steckverschluss nach einem vorstehenden Anspruch, wobei die Verbindungshülse (300) eine zweite Dichtung (326) umfasst, die an dem ersten Ende (301) positioniert ist, wobei ein Befestigungselement (308) entlang der Radialachse (14) durch eine Außenoberfläche des Schafts (310) erstreckbar ist, um sich in die zweite Dichtung (326) zu erstrecken, wobei die zweite Dichtung (326) ausgebildet ist, das Glasfaserkabel (42) zu umgeben, das durch den Durchgang (312) an dem Schaft (310) positioniert ist.

9. Steckverschluss (10) nach einem vorstehenden Anspruch, wobei die Vielzahl von Flanschen an der Verbindungshülse (300) einen mittleren Flansch (316) umfasst, der zwischen dem ersten Ende (301) und dem zweiten Ende (302) positioniert ist, wobei der mittlere Flansch (316) eine flache Oberfläche (320) umfasst, die sich entlang der Längsachse (12) erstreckt.

10. Steckverschluss (10) nach Anspruch 9, wobei durch die flache Oberfläche (320) eine Sehne entlang einer gerundeten Außenoberfläche des mittleren Flansches (316) gebildet ist.

## Revendications

1. Fermeture (10) bout à bout pour un câble (42) à fibre optique, la fermeture (10) bout à bout comprenant :
un couvercle (20) formant un intérieur (22) et une ouverture (24) donnant accès à l'intérieur (22) ;
un ensemble plateau (30) pouvant être inséré dans l'intérieur (22) pour être disposé à l'intérieur du couvercle (20), l'ensemble plateau (30) étant configuré pour faciliter des connexions de composants de transmission à fibre optique ;
une base (40) pouvant au moins partiellement être insérée le long d'un axe longitudinal (12) dans l'intérieur (22) formé par le couvercle (20), la base (40) comprenant une première surface externe (104) séparée le long de l'axe longitudinal (12) d'une deuxième surface externe (102), la deuxième surface externe (102) étant proche de l'intérieur (22) du couvercle (20) et la première surface externe (104) étant distale de l'intérieur (22) le long de l'axe longitudinal (12), dans laquelle une cavité (106) est formée entre la première surface externe (104) et la deuxième surface externe (102), et dans laquelle la cavité (106) est formée entre une paire de parois latérales (108) s'étendant le long de l'axe longitudinal (12) ; et
un collier (300) de connecteur pouvant être inséré dans la cavité (106) au niveau de la base (40), le collier (300) de connecteur comprenant un arbre (310) s'étendant le long de l'axe longitudinal (12), l'arbre (310) formant un passage (312) s'étendant entre une première extrémité (301) proche de la première surface externe (104) et une deuxième extrémité (302) proche de la deuxième surface externe (102), le passage (312) étant configuré pour recevoir un câble (42) à fibre optique à travers celui-ci, l'arbre (310) formant une pluralité de brides (314, 316, 318) s'étendant vers l'extérieur le long d'un axe radial (14) pour inhiber le mouvement du collier (300) de connecteur à l'intérieur de la base (40) le long de l'axe longitudinal (12), l'arbre (310) formant une rainure (322, 324) configurée pour positionner le collier (300) de connecteur par rapport à la base (40) ;
**caractérisée en ce que**
le collier (300) de connecteur comprend en outre un premier joint d'étanchéité (330) positionné au niveau de la deuxième extrémité (302), et une fixation (340) pouvant être vissée sur la deuxième extrémité (302) de l'arbre (310) pour positionner au moins une partie du premier joint d'étanchéité (330) entre la fixation (340) et l'arbre (310), le premier joint d'étanchéité (330) étant configuré pour s'étendre autour d'un câble (42) à fibre optique s'étendant par l'intermédiaire du passage (312) à travers le collier (300) de connecteur.

2. Fermeture (10) bout à bout selon la revendication 1, dans laquelle la rainure (322, 324) s'étend le long de l'axe longitudinal (12).

3. Fermeture (10) bout à bout selon la revendication 1 ou la revendication 2, dans laquelle la rainure (322, 324) s'étend à travers une bride médiane (316) de la pluralité de brides positionnée entre la première extrémité (301) et la deuxième extrémité (302) de l'arbre (310).

4. Fermeture (10) bout à bout selon une quelconque revendication précédente, comprenant en outre au moins un ensemble coin (120), dans laquelle le ou chaque ensemble coin (120) comprend une bride s'étendant le long de l'axe longitudinal (12) correspondant à la rainure (322, 324), la bride pouvant être reçue au niveau de la rainure (322, 324) lorsque le ou chaque ensemble coin (120) est positionné au niveau de la cavité (106) au niveau de la base (40).

5. Fermeture (10) bout à bout selon une quelconque revendication précédente, le collier (300) de connecteur comprenant en outre une première bride d'extrémité (314) de la pluralité de brides, la première bride d'extrémité (314) étant configurée pour venir en butée contre la première surface externe (104) de la base (40).

6. Fermeture (10) bout à bout selon une quelconque revendication précédente, le collier (300) de connecteur comprenant en outre une deuxième bride d'extrémité (318) de la pluralité de brides, la deuxième bride d'extrémité (318) étant configurée pour venir en butée contre la deuxième surface externe (102) de la base (40).

7. Fermeture (10) bout à bout selon la revendication 1, le premier joint d'étanchéité (330) comprenant un passe-fil en caoutchouc, un collier, un cylindre, ou un bloc présentant une ouverture correspondante au passage (312).

8. Fermeture bout à bout selon une quelconque revendication précédente, le collier (300) de connecteur comprenant un deuxième joint d'étanchéité (326) positionné au niveau de la première extrémité (301), dans laquelle une fixation (308) peut être étendue le long de l'axe radial (14) à travers une surface externe de l'arbre (310) pour s'étendre dans le deuxième joint d'étanchéité (326), le deuxième joint d'étanchéité (326) étant configuré pour entourer le câble (42) à fibre optique positionné à travers le passage (312) au niveau de l'arbre (310).

9. Fermeture (10) bout à bout selon une quelconque revendication précédente, la pluralité de brides au niveau du collier (300) de connecteur comprenant une bride médiane (316) positionnée entre la première extrémité (301) et la deuxième extrémité (302), la bride médiane (316) comprenant une surface plate (320) s'étendant le long de l'axe longitudinal (12).

10. Fermeture (10) bout à bout selon la revendication 9, la surface plate (320) formant une corde le long d'une surface externe arrondie de la bride médiane (316).
